# EUROPÄISCHE PATENTSCHRIFT

(11) **EP 1 333 925 B1**
(45) Veröffentlichungstag und Bekanntmachung des Hinweises auf die Patenterteilung: **15.12.2004**
(21) Anmeldenummer: 01980114.1
(22) Anmeldetag: 15.11.2001
(51) Int. Cl.: B01L 3/02, B01L 11/00

(54) **VORRICHTUNG ZUR AUFNAHME UND/ODER ABGABE VON FLÜSSIGKEITSPROBEN**
DEVICE FOR THE TAKE-UP AND/OR RELEASE OF LIQUID SAMPLES
DISPOSITIF PERMETTANT DE PRELEVER ET/OU DE DISTRIBUER DES ECHANTILLONS DE LIQUIDE

(30) Priorität: 17.11.2000 CH 225200; 29.11.2000 CH 231400
(43) Veröffentlichungstag der Anmeldung: 13.08.2003
(73) Patentinhaber: Tecan Trading AG, 8708 Männedorf (CH)
(72) Erfinder: INGENHOVEN, Nikolaus, CH-8708 Männedorf (CH); SCHMID, Noa, CH-9514 Wuppenau (CH)
(74) Vertreter: OK pat AG
(86) Internationale Anmeldenummer: PCT/CH2001/000672
(87) Internationale Veröffentlichungsnummer: WO 2002/040163

(56) Entgegenhaltungen:
- WO-A-97/15394
- DE-A- 4 318 919
- DE-A- 19 827 293
- US-A- 4 087 248
- US-A- 5 763 278
- US-A- 5 916 524
- US-A- 6 024 925

## Beschreibung

Die Erfindung betrifft eine Vorrichtung zur Aufnahme und/oder Abgabe von Flüssigkeitsproben entsprechend dem Oberbegriff des unabhängigen Anspruchs 1 sowie Systeme, die eine oder mehrere solcher Vorrichtungen umfassen.

Es ist bekannt, dass Tropfen mit einem Volumen von mehr als 10 µl sehr einfach über die Luft abgegeben werden können, weil die Tropfen bei korrektem Umgang mit der Pipette von selbst die Pipettenspitze verlassen. Die Tropfengrösse wird dann durch die physikalischen Eigenschaften der Probenflüssigkeit, wie Oberflächenspannung oder Viskosität bestimmt. Die Tropfengrösse limitiert somit die Auflösung der abzugebenden Menge Flüssigkeit.

Die Aufnahme und Abgabe, d.h. das Pipettieren von Flüssigkeitsproben mit einem Volumen von weniger als 10 µl verlangt meist Instrumente und Techniken, welche die Abgabe solch kleiner Proben garantieren. Das Abgeben einer Flüssigkeit mit einer Pipettenspitze, d.h. mit dem Endstück einer Vorrichtung zur Aufnahme und/oder Abgabe von Flüssigkeitsproben kann aus der Luft ("From Air") oder über das Berühren einer Oberfläche geschehen. Diese Oberfläche kann die feste Oberfläche eines Gefässes ("on Tip Touch") sein, in welches die Flüssigkeitsprobe abgegeben werden soll. Es kann auch die Oberfläche einer sich in diesem Gefäss befindlichen Flüssigkeit ("on Liquid Surface") sein. Ein an das Dispensieren anschliessender Mischvorgang ist - besonders bei sehr kleinen Probenvolumina im Nano- oder gar Picoliter-Bereich zu empfehlen, damit eine gleichmässige Verteilung des Probenvolumens in einer Reaktionsflüssigkeit gewährleistet ist.

Wegwerfspitzen bzw. abwerfbare Pipettenspitzen reduzieren wesentlich die Gefahr eines ungewollten Übertragens von Probenteilen in ein Gefäss (Kontamination). Bekannt sind einfache Wegwerfspitzen (sogenannte "Air-Displacement Tips"), deren Geometrie und Material für das reproduzierbare Aufnehmen und/oder Abgeben von sehr kleinen Volumina optimiert ist. Die Verwendung von sogenannten "Positive-Displacement Tips", welche an ihrer Innenseite einen Pumpkolben aufweisen, ist ebenfalls bekannt. Zum Automatisieren des Pipettierprozesses von Volumina unterhalb 10 µl müssen zwei Vorgänge voneinander unterschieden werden: Die definierte Aufnahme (Aspiration) und die anschliessende Abgabe (Dispensierung) von Flüssigkeitsproben. Zwischen diesen Vorgängen wird üblicherweise die Pipettenspitze vom Experimentator oder einem Automaten bewegt, so dass der Aufnahmeort einer Flüssigkeitsprobe von deren Abgabeort oft verschieden ist. Für die Richtigkeit und Reproduzierbarkeit einer Aufnahme und/oder Abgabe ist nur das Flüssigkeitssystem wesentlich, welches aus Pumpe (z.B. ein als Spritzenpumpe ausgebildeter Diluter), Flüssigkeitsleitung und Endstück (Pipettenspitze) besteht.

Aus US 5,763,278 ist eine Vorrichtung und ein entsprechendes Verfahren bekannt. Es handelt sich um ein automatisches Pipettieren von kleinen Volumina, wobei die Vorrichtung eine Pipettiernadel, einen Diluter mit einem Flüssigkeitsausgang mit einer Spritze und einem Ventil umfasst. Die Spritze umfasst einen Kolben und einen Kolbenantrieb. Eine Leitung verbindet die Nadel und den Flüssigkeitsausgang des Diluters, wobei der Diluter und die Leitung eine im Wesentlichen inkompressible Flüssigkeit enthalten. Ein Impulsgenerator ist in der Vorrichtung angeordnet und mit der inkompressiblen Flüssigkeit in der Leitung verbunden, so dass direkt in die Flüssigkeit der Leitung mechanische Impulse mit einer Kraft von mindestens 0.01 Ns abgegeben werden können. Ein solcher Impuls dient dazu, Flüssigkeit aus der Nadel zu treiben. Die Tropfengrösse wird durch einen gezielten Vorschub des Diluterkolbens definiert und der Tropfen mit einem Impuls aus der Nadel ausgeworfen. Durch die Definition des Volumens mit dem Diluter hängt die Tropfengrösse und deren Reproduzierbarkeit von der Auflösung des Diluters ab und wird durch diesen limitiert.

Aus JP 09 327628 ist eine Pipettiervorrichtung bekannt, die eine Kolbenpumpe und einen Impulsgenerator in Form eines Piezoelements umfasst. Das Piezoelement ist zugleich die Frontplatte des Kolbens und wird zum Abschliessen des Dispensiervorganges verwendet. Der Kolben bewirkt durch seine Abwärtsbewegung den grösseren Teil der Flüssigkeitsabgabe und ist während der Aktuierung der Piezoplatte blockiert. Die Bewegungsrichtung der Piezoplatte entspricht dabei derjenigen des Kolbens. Zumindest ein Teil des abgegebenen Volumens hängt somit immer von der Bewegung des Kolbens ab, so dass die Reproduzierbarkeit der Kolbenbewegung die Auflösung der Pipettiervorrichtung limitiert.

Aus WO 97/15394 ist eine dort als "JetWell" bezeichnete Multiwellplatte bekannt, deren Wells eine obere, grosse Öffnung und eine untere, düsenartige Öffnung aufweisen. Wird ein Druckimpuls auf die Oberfläche ausgeübt, so wird über jede dieser Düsen ein Flüssigkeitsstrahl ausgetrieben. Durch die Wahl der Dauer eines solchen Druckimpulses wird das Volumen der ausgestossenen Flüssigkeit bestimmt. Grössere Volumina können auf diese Wiese nicht pipettiert oder dispensiert werden.

Aus DE 43 18 919 ist ein gattungsgemässes Probendosiersystem mit einer Injektionsnadel, die über flexible Leitungen mit einer stationären Dosierpumpe sowie mit einem ebenfalls stationären Flüssigkeitsreservoir verbunden ist, bekannt. Offenbart wird ein für die Flüssigkeitschromatographie geeignetes Probendosiersystem, bei welchem Umschalteinrichtungen vorgesehen sind, mit denen in einer ersten Stellung unter Verschliessen der Injektionsnadel eine Verbindung zwischen dem Flüssigkeitsreservoir und der Dosierpumpe herstellbar ist und in einer zweiten Stellung die Injektionsnadel wieder freigebbar und das Spülflüssigkeitsreservoir von der Dosierpumpe trennbar ist. Diese Umschaltvorrichtungen sind im Wesentlichen als eine Art Dreiwegventil ausgebildet und ermöglichen das Spülen der Injektionsnadel und - durch Zurückziehen des Kolbens - auch des Zylinders.

Aufgabe der vorliegenden Erfindung ist es, eine alternative Vorrichtung der eingangs genannten Art zur Aufnahme und/oder Abgabe von Flüssigkeitsproben bis In den Picoliter-Bereich vorzuschlagen, welche die Spülung des Hohlraumes über einen von der Pipettenspitze unabhängigen Spüleinlass ermöglicht.

Erfindungsgemäss wird diese Aufgabe gelöst, indem eine Vorrichtung zur Aufnahme und/oder Abgabe von Flüssigkeitsproben, entsprechend den Merkmalen des unabhängigen Anspruchs 1, vorgeschlagen wird. Weitere bevorzugte Merkmale ergeben sich aus den abhängigen Ansprüchen.

Eine solche Vorrichtung zur Aufnahme und/oder Abgabe von Flüssigkeitsproben hat den Vorteil, dass sie sehr platzsparend gebaut werden kann, so dass ein System zur Aufnahme und/oder Abgabe von Proben einer Flüssigkeit eine einzelne, bevorzugt aber viele solche Vorrichtungen umfassen kann, welche in linearen Gruppen oder in zwei-dimensionalen Arrays angeordnet sein können. Solche Systeme sind vorzugsweise automatisiert und damit zum Bearbeiten von grossen Probenzahlen geeignet. Zum Zweck der Rationalisierung der Abläufe sind solche Systeme bevorzugt mit einer Robotervorrichtung ausgerüstet, der die Vorrichtungen in X- und/oder Y- und/oder Z-Richtung bewegen kann. Wegen der Vielzahl an Vorrichtungen in Arrayanordnung können die Flüssigkeitsproben an die "Töpfchen" oder "Wells" von Mikroplatten, die auch als Mikrotiterplatten™ (Handelsmarke von Beckman Coulter, Inc. 4300 N. Harbour Blvd., P.O. Box 3100, Fullerton, CA 92834, USA) bekannt sind, abgegeben werden.

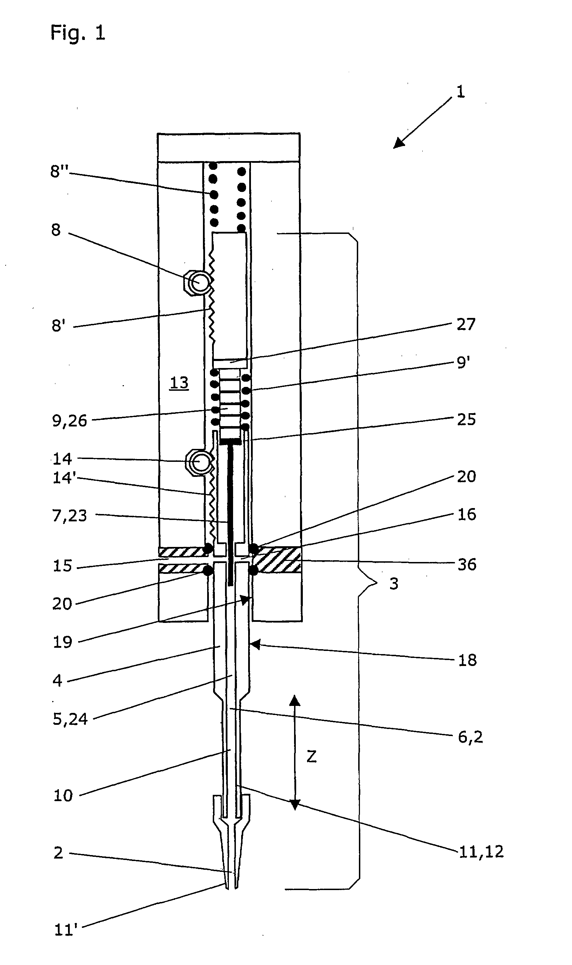

Bevorzugte und beispielhafte Ausführungsformen der erfindungsgemässen Vorrichtung zur Aufnahme und/oder Abgabe von Flüssigkeitsproben werden im Folgenden an Hand von schematischen Zeichnungen Fig 1-13 - welche die Erfindung lediglich veranschaulichen, deren Umfang aber nicht einschränken - näher erläutert. Dabei zeigen:
- Fig. 1: eine Vorrichtung zur Aufnahme und/oder Abgabe von Flüssigkeitsproben, gemäss einer ersten Ausführungsform;
- Fig. 2: die Vorrichtung gemäss der ersten Ausführungsform in der "Spül-Position";
- Fig. 3: die Vorrichtung gemäss der ersten Ausführungsform in der "Konditionier-Position";
- Fig. 4: die Vorrichtung gemäss der ersten Ausführungsform in einer ersten "Transfer-Position";
- Fig. 5: die Vorrichtung gemäss der ersten Ausführungsform in einer ersten "Dipp-Position";
- Fig. 6: die Vorrichtung gemäss der ersten Ausführungsform in der "Aspirier-Position";
- Fig. 7: die Vorrichtung gemäss der ersten Ausführungsform in einer zweiten "Transfer-Position'';
- Fig. 8: die Vorrichtung gemäss der ersten Ausführungsform in einer zweiten "Dipp-Position";
- Fig. 9: die Vorrichtung gemäss der ersten Ausführungsform in einer ersten "Dispensier-Position";
- Fig. 10: die Vorrichtung gemäss der ersten Ausführungsform in einer zweiten "Dispensier-Position";
- Fig. 11: die Vorrichtung gemäss der ersten Ausführungsform in einer dritten "Dispensier-Position";
- Fig. 12: ein vertikaler Teilschnitt eines Systems mit mehreren Vorrichtungen gemäss der ersten Ausführungsform in der "Spül-Position";
- Fig. 13: ein horizontaler, stark schematisierter Teilschnitt des Systems in Fig. 12.

Ferner zeigen :
- Fig. 14: eine Vorrichtung zur Aufnahme und/oder Abgabe von Flüssigkeitsproben mit einem Spülanschluss gemäss einer ersten Variante;
- Fig. 15: eine Vorrichtung zur Aufnahme und/oder Abgabe von Flüssigkeitsproben mit einem Spülanschluss gemäss einer zweiten Variante;
- Fig. 16: eine Vorrichtung zur Aufnahme und/oder Abgabe von Flüssigkeitsproben mit einem Impulsgenerator gemäss einer ersten Variante;
- Fig. 17: eine Vorrichtung zur Aufnahme und/oder Abgabe von Flüssigkeitsproben mit einem Impulsgenerator gemäss einer zweiten Variante.

Figur 1 zeigt eine erfindungsgemässe Vorrichtung zur Aufnahme und/oder Abgabe von Flüssigkeitsproben, gemäss einer ersten Ausführungsform. Diese Vorrichtung 1 dient zur Aufnahme und/oder Abgabe von Proben einer Flüssigkeit 2 und damit zur Dispensation und/oder zum Pipettieren solcher Flüssigkeiten. Diese Vorrichtung 1 umfasst eine Bewegungseinheit 3, welche wiederum einen Hohlkörper 4 mit einem Hohlraum 5 umfasst, wobei der Hohlraum 5 mit einer Systemflüssigkeit 6 oder einer Probenflüssigkeit 2 im Wesentlichen füllbar ist. Die Bewegungseinheit 3 umfasst zudem ein auf den Hohlraum 5 wirkendes Bewegungselement 7 zum Aspirieren und/oder Dispensieren der Flüssigkeit 2 und ein, im Eingriff mit einem ersten Antrieb 8 stehendes, erstes Antriebselement 8' zum Auslenken des Bewegungselements 7 beim Aspirieren bzw. Dispensieren. Die Bewegungseinheit 3 umfasst des Weiteren einen Impulsgenerator 9 zum Erzeugen von Druckwellen in einer der Flüssigkeiten 2,6 im Hohlraum 5 beim Dispensieren, eine Flüssigkeitsleitung 10, in welche der Hohlraum 5 mündet, sowie eine Pipettenspitze 11 oder einen Adapter 12 zur Aufnahme einer abwerfbaren Pipettenspitze 11'. Dabei geht die Flüssigkeitsleitung 10 in den Adapter 12 und/oder die Pipettenspitze 11,11' über bzw. die Flüssigkeitsleitung 10 umfasst die Pipettenspitze 11 und/oder den Adapter 12.

Die Bewegungseinheit 3 ist an einer Trägereinheit 13 zumindest in Richtung einer X-, Y- oder Z-Raumachse beweglich angeordnet, wobei die Trägereinheit 13 - zum Bewegen der Bewegungseinheit 3 in Richtung einer X-, Y- oder Z-Raumachse - zumindest ein, im Eingriff mit einem zweiten Antrieb 14 stehendes, zweites Antriebselement 14' umfasst. Die Trägereinheit 13 umfasst zudem eine Spülleitung 15 zum Spülen und/oder Füllen des Hohlraumes 5 in einer von der Pipettenspitze vorzugsweise unabhängigen Richtung. Der Hohlkörper 4 umfasst einen in den Hohlraum 5 mündenden Spüleinlass 16 und ist - in Folge seiner Beweglichkeit in Richtung einer X-, Y- oder Z-Raumachse - zum Verbinden und Trennen von Spülleitung 15 und Spüleinlass 16 ausgebildet.

Beim Pipettieren von kleinen Volumina wird nur die Pipettenspitze 11,11' in ihrem vordersten Bereich mit einem bestimmten Volumen Probenflüssigkeit 2 gefüllt (Aspiration), welches als Ganzes oder in Teilschritten wieder abgegeben werden kann (Dispens). In solchen Fällen ist der Hohlraum 5 vorzugsweise im Wesentlichen mit einer Systemflüssigkeit 6 gefüllt, damit sich die vom Impulsgenerator 9 an die Systemflüssigkeit abgegebenen Impulse ungedämpft bis zur Austrittsöffnung der Pipettenspitze 11,11' fortpflanzen und dadurch den Tropfenabriss oder den Tropfenauswurf bewirken können. Das Einfüllen der Systemflüssigkeit 6 erfolgt vorzugsweise über die Spülleitung 15 und den Spüleinlass 16, was das Eliminieren (Ausspülen) von Luftblasen aus dem Hohlraum 5 wesentlich erleichtert.

Beim ausschliesslichen Dispensieren wird der Hohlraum 5, die Flüssigkeitsleitung 10, der Adapter 12 und/oder die Pipettenspitze 11,11' vorzugsweise über die Spülleitung 15 und den Spüleinlass 16 mit einer Probenflüssigkeit 2 gefüllt. Die Probenflüssigkeit 2 wird anschliessend durch Zusammenwirken von Bewegungselement 7 und Impulsgenerator 9, oder ausschliesslich durch den Impulsgenerator 9 bewirkt, abgegeben.

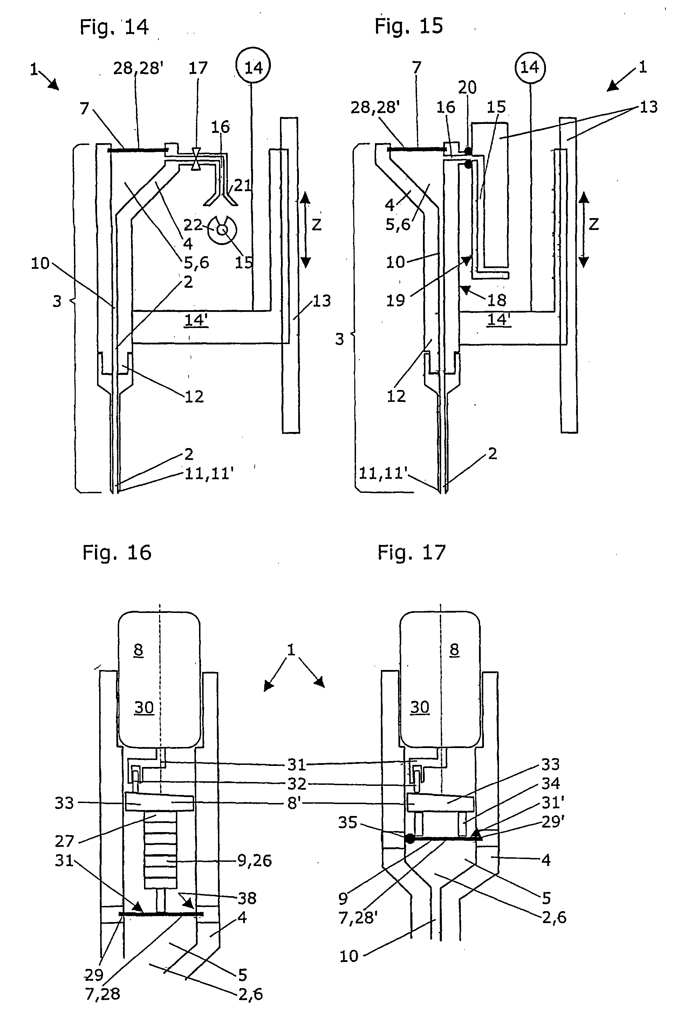

Die Spülleitung 15 in der Trägereinheit 13 und der Spüleinlass 16 des Hohlkörpers 4 müssen nicht konstant miteinander verbunden sein, weil der Inhalt der Pipettenspitze 11,11' bzw. des Hohlraumes 5 meistens für eine Abgabe von vielen Volumeneinheiten ausreicht. Es genügt somit, Spülleitung 15 und Spüleinlass 16 sporadisch zum Füllen des Hohlraumes 5 und zu dessen Spülung miteinander zu verbinden. Zu diesem Zweck ist die ganze Bewegungseinheit 3 in Richtung einer X-, Y- oder Z-Raumachse beweglich ausgebildet, d.h. durch eine Bewegung in zumindest einer dieser Richtungen können Spülleitung 15 und Spüleinlass 16 miteinander verbunden oder voneinander getrennt werden. In diesem einfachsten Fall ist die Bewegungseinheit 3 als Schieberventil ausgebildet; der Spüleinlass kann auch ein zusätzliches Ventil 17 zum Öffnen und Schliessen des Spüleinlasses 16 aufweisen (vgl. Fig. 14).

In dieser ersten Ausführungsform, gemäss Fig. 1, ist der Impulsgenerator 9 als vorgespannter Piezo-Stapel 26 bzw. das Bewegungselement 7 als Kolben 23, der in einem als Zylinderraum 24 ausgebildeten Hohlraum 5 beweglich angeordnet ist, ausgebildet. Das hintere Ende 25 des Kolbens 23 weist in etwa dieselbe Fläche wie der Piezo-Stapel 26 auf und ist mit diesem verbunden. Das hintere Ende 27 des Piezo-Stapels ist mit dem ersten Antriebselement 8' verbunden, welches als Zahnstange ausgebildet ist und seinerseits mit dem ersten Antrieb 8 im Eingriff steht und über dessen Drehung angehoben oder abgesenkt werden kann. Der Piezo-Stapel 26 umfasst vorzugsweise eine Rückzugfeder 9', damit er den Kolben 23 nach dem Aktuieren des Impulsgenerators 9 wieder in seine ursprüngliche Position zurückbewegen kann. Damit das Antriebselement 8' spielfrei bewegt werden kann, umfasst es gegenüber der Trägereinheit 13 eine Federung 8". Die Federung 8" kann im Rahmen des handwerklich Üblichen, z.B. als mechanisches, pneumatische, hydraulische oder magnetische Federung ausgebildet sein.

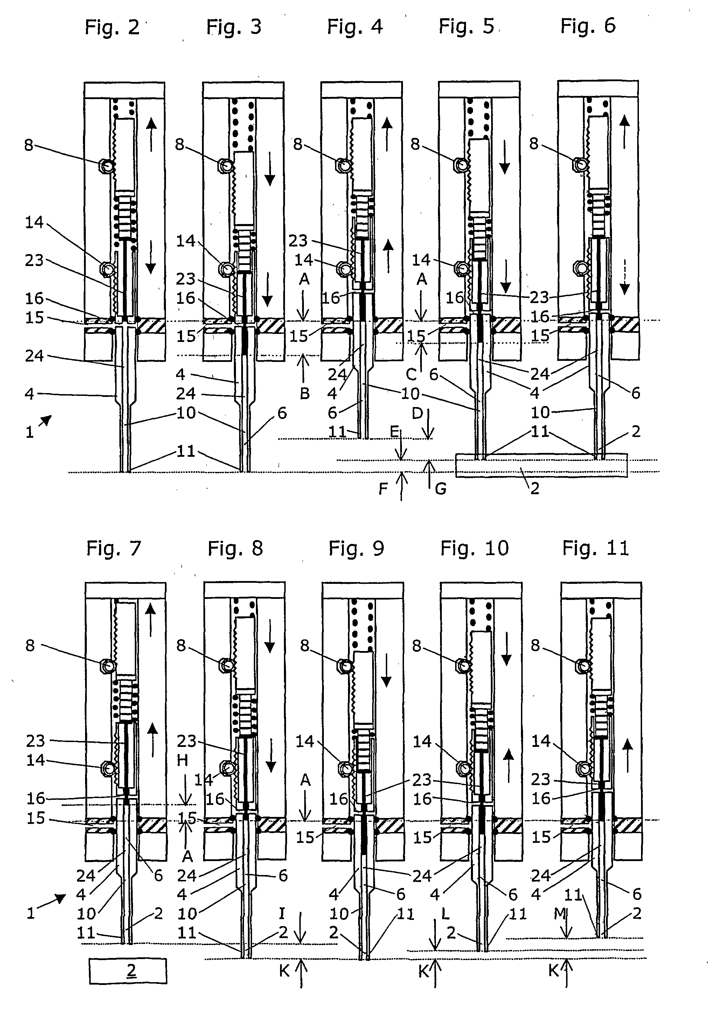

Der zweite Antrieb 14 ist im Eingriff mit dem zweiten Antriebselement 14', welches als Zahnstange auf der äusseren Oberfläche 18 des Hohlkörpers 4 ausgebildet ist. Der Zylinderraum 24 geht übergangslos in die Flüssigkeitsleitung 10 und den Adapter 12 über, auf welchen eine abwerfbare Pipettenspitze 11' aufgesetzt ist. Abweichend von dieser Darstellung kann der Adapter 12 selbst als Pipettenspitze ausgebildet sein (vgl. Fig. 2-11).

Die Trägereinheit 13 umschliesst die Bewegungseinheit 3 im Wesentlichen, weshalb Bewegungseinheit 3 und Trägereinheit 13 zumindest teilweise als koaxiale Rohre ausgebildet sind. Diese Bauweise vereinigt auf kleinstem Raume alle Teile der erfindungsgemässen Vorrichtung. Die Spülleitung ist im Bereich der Trägereinheit 13 in einen Ring 36 eingeformt, der gegenüber des Hohlkörpers 4 dichtend ausgebildet ist (nicht gezeigt). Wie hier dargestellt, können Dichtungsmittel 20 (z.B. in Form von O-Ringen) zwischen der äusseren Oberfläche 18 des Hohlkörpers 4 und der inneren Oberfläche 19 der Trägereinheit angeordnet sein: Die Bewegungseinheit 3 ist hier als senkrecht (in Z-Richtung) bewegbares Schieberventil ausgebildet.

Diese einfache Vorrichtung zur Aufnahme und/oder Abgabe von Proben einer Flüssigkeit umfasst vorzugsweise eine Steuerung zum Bewegen des Kolbens 23 mit dem ersten Antrieb 8 und/oder der Bewegungseinheit 3 mit dem zweiten Antrieb 14 sowie der Impulse des Piezostapels 26. Diese Steuerung kann als externer Rechner ausgebildet oder auch als Elektronikbauteil (CHIP) in die Vorrichtung bzw. in ein die Vorrichtung aufnehmendes Gehäuse (nicht dargestellt) eingebaut sein. Diese Steuerung dient zudem der Synchronisierung der Bewegungen des ersten und zweiten Antriebes, damit die ganze Bewegungseinheit 3 in Z-Richtung und ohne jede Volumenänderung im Zylinderraum 24 bewegt werden kann.

Die Figuren 2 bis 11 zeigen bevorzugte, prinzipielle Verwendungen der Vorrichtung 1 einer ersten Ausführungsform, gemäss Fig. 1, zur Aufnahme und/oder Abgabe von Proben einer Flüssigkeit:

In Fig. 2 befindet sich die Vorrichtung 1 in der "Spül-Position". Der Kolben 23 ist mittels des ersten Antriebes 8 auf ein Niveau "A" zurückgezogen (oberer Pfeil) und gibt den Spüleinlass 16, der sich im hintersten Bereich des Zylinderraumes 24 befindet, frei. Der Hohlkörper 4 ist ganz abgesenkt (unterer Pfeil), so dass die Pipettenspitze das unterste, mit dem zweiten Antrieb 14 erreichbare Niveau "F" einnimmt. Spülleitung 15 und Spüleinlass 16 sind aufeinander ausgerichtet und offen, so dass von hinten und unabhängig von der Pipettenspitze der ganze Zylinderraum 24, die Flüssigkeitsleitung 10 und die Pipettenspitze 11 mit Systemflüssigkeit durchgespült und von Luftblasen befreit werden kann. Die Vorrichtung 1 wird für dieses Spülen bevorzugt in eine Stellung 'i' gebracht, in weicher die austretende Systemflüssigkeit wieder aufgesammelt und wiederverwertet werden kann. Diese Stellung 'i' definiert eine erste X/Y-Position der Vorrichtung.

In Fig. 3 befindet sich die Vorrichtung 1 in der "Konditionier-Position". Der Kolben 23 ist mittels des ersten Antriebes 8 ganz auf ein Niveau "B" abgesenkt (oberer Pfeil) und verschliesst den Spüleinlass 16. Der Hohlkörper 4 ist ganz abgesenkt (unterer Pfeil), so dass die Pipettenspitze das unterste, mit dem zweiten Antrieb 14 erreichbare Niveau "F" einnimmt. Spülleitung 15 und Spüleinlass 16 sind aufeinander ausgerichtet und offen, so dass - falls notwendig - während der Abwärtsbewegung des Kolbens 23 von hinten etwas Systemflüssigkeit nachgezogen werden kann. Der Zylinderraum 24, die Flüssigkeitsleitung 10 und die Pipettenspitze 11 sind mit Systemflüssigkeit 6 im Wesentlichen gefüllt. Die Vorrichtung 1 wird für dieses Konditionieren bevorzugt in der Stellung 'i' gehalten, in welcher die austretende Systemflüssigkeit wieder aufgesammelt und wiederverwertet werden kann.

In Fig. 4 befindet sich die Vorrichtung 1 in einer ersten "Transfer-Position". Der Kolben 23 ist mittels des ersten Antriebes 8 auf das Niveau "A" zurückgezogen (oberer Pfeil). Der Hohlkörper 4 ist ebenfalls ganz zurückgezogen (unterer Pfeil), so dass die Pipettenspitze das oberste, mit dem zweiten Antrieb 14 erreichbare Niveau "D" einnimmt. Spülleitung 15 und Spüleinlass 16 sind nun gegeneinander verschoben und dadurch verschlossen. Durch die Synchronisation der beiden Antriebe 8,14 mit einer geeigneten Steuerung (nicht gezeigt) konnten diese Positionen eingenommen werden, ohne dass das Volumen im Zylinderraum 24 sich veränderte. Der Zylinderraum 24, die Flüssigkeitsleitung 10 und die Pipettenspitze 11 sind deshalb unverändert mit Systemflüssigkeit 6 gefüllt. Die Vorrichtung 1 wird anschliessend in eine Stellung 'ii' gebracht, in welcher Probenflüssigkeit aufgenommen werden soll. Diese Stellung 'ii' definiert eine zweite X/Y-Position der Vorrichtung.

In Fig. 5 befindet sich die Vorrichtung 1 in einer ersten "Dipp-Position". Der Kolben 23 ist mittels des ersten Antriebes 8 auf das Niveau "C" abgesenkt (oberer Pfeil). Der Hohlkörper 4 wird um den gleichen Betrag abgesenkt (unterer Pfeil), so dass die Pipettenspitze das Niveau "E" einnimmt und dabei in die Probenflüssigkeit 2 eintaucht. Spülleitung 15 und Spüleinlass 16 bleiben gegeneinander verschoben und dadurch verschlossen. Durch die Synchronisation der beiden Antriebe 8,14 mit einer geeigneten Steuerung (nicht gezeigt) konnten diese Positionen eingenommen werden, ohne dass das Volumen im Zylinderraum 24 sich veränderte. Der Zylinderraum 24, die Flüssigkeitsleitung 10 und die Pipettenspitze 11 sind deshalb unverändert mit Systemflüssigkeit 6 gefüllt und die Vorrichtung 1 ist bereit zum Aspirieren der Probenflüssigkeit 2. Die Vorrichtung 1 befindet sich in der Stellung 'ii', in welcher Probenflüssigkeit aufgenommen wird. Diese Stellung 'ii' kann dort sein, wo sich ein grosses Gefäss mit Probenflüssigkeit befindet, sie kann aber z.B. auch im Well einer Mikroplatte sein, von wo eine einzelne Probe aufgenommen werden soll.

In Fig. 6 befindet sich die Vorrichtung 1 in der "Aspirier-Position". Der Kolben 23 wird mittels des ersten Antriebes 8 auf das Niveau "A" zurückgezogen (oberer Pfeil). Der Hohlkörper 4 wird nicht bewegt und bleibt in die Probenflüssigkeit 2 eingetaucht. Spülleitung 15 und Spüleinlass 16 bleiben gegeneinander verschoben und dadurch verschlossen. Durch das alleinige Bewegen des ersten Antriebs 8 mit einer geeigneten Steuerung (nicht gezeigt) wird das Volumen im Zylinderraum 24 vergrössert und damit Probenflüssigkeit 2 in die Pipettenspitze 11 aufgenommen. Die Vorrichtung 1 befindet sich in der Stellung 'ii'. Alternativ zu dieser beschriebenen Position der Vorrichtung 1 beim Aufnehmen von Proben aus grossen Gefässen mit grosser Flüssigkeitsoberfläche muss bei kleinen Gefässen mit kleiner Flüssigkeitsoberfläche die Bewegungseinheit 3 der sinkenden Flüssigkeitsoberfläche nachgeführt werden. Dies erfolgt mittels einer synchronisierten, über die Antriebe 8 und 14 angetriebenen Bewegung des ersten und zweiten Antriebselements 8',14'.

In Fig. 7 befindet sich die Vorrichtung 1 in einer zweiten "Transfer-Position". Der Kolben 23 ist mittels des ersten Antriebes 8 auf das Niveau "H" zurückgezogen (oberer Pfeil). Der Hohlkörper 4 wird um den gleichen Betrag angehoben (unterer Pfeil), so dass die Pipettenspitze das Niveau "I" einnimmt und dabei aus der Probenflüssigkeit 2 gezogen wird. Spülleitung 15 und Spüleinlass 16 bleiben gegeneinander verschoben und dadurch verschlossen. Durch die Synchronisation der beiden Antriebe 8,14 mit einer geeigneten Steuerung (nicht gezeigt) konnten diese Positionen eingenommen werden, ohne dass das Volumen im Zylinderraum 24 sich veränderte. Der Zylinderraum 24, die Flüssigkeitsleitung 10 und die Pipettenspitze 11 sind deshalb unverändert mit Systemflüssigkeit 6 bzw. Probenflüssigkeit 2 gefüllt. Die Vorrichtung 1 wird anschliessend in eine Stellung 'iii' gebracht, in welcher Probenflüssigkeit abgegeben werden soll. Diese Stellung 'iii' kann dort sein, wo sich ein Sammelgefäss mit Probenflüssigkeit befindet, sie kann aber z.B. auch im Well einer Mikroplatte sein, wo eine einzelne Probe abgegeben werden soll. Diese Stellung 'iii' definiert eine dritte X/Y-Position der Vorrichtung.

In Fig. 8 befindet sich die Vorrichtung 1 in einer zweiten "Dipp-Position". Der Kolben 23 ist mittels des ersten Antriebes 8 auf das Niveau "A" abgesenkt (oberer Pfeil). Der Hohlkörper 4 wird um den gleichen Betrag abgesenkt (unterer Pfeil), so dass die Pipettenspitze das Niveau "K" einnimmt und dabei die Oberfläche einer vorgelegten Flüssigkeit ("on Liquid Surface") oder des Gefässes, insbesondere die Oberfläche eines Wells einer Mikroplatte mit z.B. 96, 384 oder 1536 Wells, bzw. die im Wesentlichen ebene Oberfläche eines Targets oder eines Bio-Chips berührt ("on Tip Touch"); das Niveau "K" kann aber auch oberhalb einer Oberfläche definiert für die Abgabe aus der Luft ("From Air") sein. Spülleitung 15 und Spüleinlass 16 bleiben gegeneinander verschoben und dadurch verschlossen. Durch die Synchronisation der beiden Antriebe 8,14 mit einer geeigneten Steuerung (nicht gezeigt) konnten diese Positionen eingenommen werden, ohne dass das Volumen im Zylinderraum 24 sich veränderte. Der Zylinderraum 24, die Flüssigkeitsleitung 10 und die Pipettenspitze 11 sind deshalb unverändert mit Systemflüssigkeit 6 bzw. Probenflüssigkeit 2 gefüllt und die Vorrichtung 1 ist bereit zum Dispensieren der Probenflüssigkeit 2. Die Vorrichtung 1 befindet sich in der Stellung 'iii'.

In Fig. 9 befindet sich die Vorrichtung 1 in einer ersten möglichen "Dispensier-Position", in welcher die Probe unter Vorschub des Kolbens 23 (oberer Pfeil) und unter gleichzeitigem Unbeweglichhalten des Hohlkörpers 4 und damit unter Beibehalten des Niveaus "K" mit der Pipettenspitze 11 abgegeben werden soll. Typischerweise geschieht dies beim Abgeben kleiner oder grösserer Volumina "From Air" oder beim Abgeben kleiner Volumina "on Tip Touch", insbesondere beim Deponieren von kleinen Proben in einem Array und auf der Oberfläche von festen, im Wesentlichen flachen bzw. eine strukturierte Oberfläche aufweisenden Probenträgern, wie Targets für die "MALDI TOF - MS", die "Matrix Assisted Laser Desorption Ionisation - Time of Flight Mass Spectrometry" oder eines Bio-Chips, d.h. auf eine im Wesentlichen ebene Oberfläche, auf der biologische, bzw. organische und/oder anorganische Proben in einem Array angeordnet sind.

In Fig. 10 befindet sich die Vorrichtung 1 in einer zweiten möglichen "Dispensier-Position", in welcher die Probe unter Vorschub des Kolbens 23 (oberer Pfeil) und unter gleichzeitigem Zurückziehen des Hohlkörpers 4 auf ein Niveau "L" (unterer Pfeil) abgegeben werden soll. Typischerweise geschieht dies bei Abgaben "on Liquid Surface" oder "on Tip Touch", wenn mit einem langsamen Anstieg des Probenpegels gerechnet werden kann. Durch die Synchronisation der beiden Antriebe 8,14 mit einer geeigneten Steuerung (nicht gezeigt) können diese Positionen so eingenommen werden, dass das Volumen im Zylinderraum 24 sich kontinuierlich oder in einer sonst wie gewünschten Form verändert. Insbesondere kann erreicht werden, dass die Pipettenspitze während des ganzen Dispenses immer mit der Oberfläche einer vorgelegten Flüssigkeit in Berührung bleibt, ohne dass die Aussenfläche der Pipettenspitze mit der vorgelegten Flüssigkeit benetzt wird.

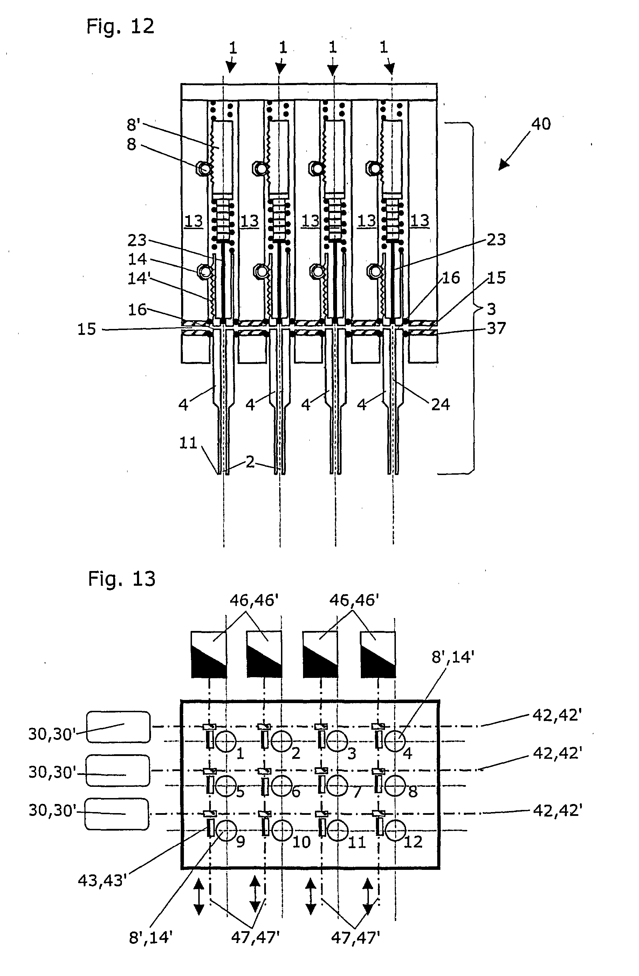

In Fig. 11 befindet sich die Vorrichtung 1 in einer dritten möglichen "Dispensier-Position", in welcher die Probe unter Beibehalten des Niveaus "A" des Kolbens 23 und unter gleichzeitigem Zurückziehen des Hohlkörpers 4 auf ein Niveau "L" (unterer Pfeil) abgegeben werden soll. Typischerweise geschieht dies bei Abgaben "on Liquid Surface", wenn mit einem schnellen Anstieg des Probenpegels gerechnet werden muss. Dies kann insbesondere in sehr kleinen Wells von hochdichten Mikroplatten der Fall sein, wenn erreicht werden soll, dass die Pipettenspitze während des ganzen Dispenses immer mit der Oberfläche einer vorgelegten Flüssigkeit in Berührung bleibt.

Während des Dispenses gemäss den Fig. 8-11 kann der Impulsgenerator 9 zum Abreissen eines abgegebenen Tropfens bzw. Volumens oder auch zum Definieren und Auswerfen eines bestimmten Volumens verwendet werden. Aus dem Gesagten ergeben sich vier Betriebsmodi:
A Grosse Volumina
   Die Abgabe von Volumina von über einem Mikroliter geschieht durch den Vorschub der Bewegungselemente 7, d.h. der Kolben 23 bzw. Keile 33 und wird allein durch den Vorschub des ersten Antriebs 8 bestimmt. Wahlweise kann mit dem Piezostapel 26 bzw. mit der Piezomembran 28' ein Impuls zum "Nachklopfen" zum Erzeugen eines Tropfenabrisses abgegeben werden.
B Mittlere Volumina
   Die Abgabe von Tropfen zwischen 0.5 und 1 µl geschieht durch den Vorschub der Bewegungselemente 7, d.h. der Kolben 23 bzw. Keile 33 und wird von dem ersten Antrieb 8 bestimmt. Die zusätzliche Aktivierung des Piezo-Stapels 26 bzw. der Piezomembran 28' ermöglicht den sauberen Tropfenabriss. Weiterhin sind folgende Varianten möglich:
   B1 Nach dem Vorschub des Kolbens 23 bzw. des Keils 33 wird der Piezo-Stapel 26 bzw. die Piezomembran 28' einmal betätigt, um den Tropfenabriss aus der Luft zu gewährleisten.
   B2 Vor dem Vorschub des Kolbens 23 bzw. des Keils 33 wird der Piezo-Stapel 26 bzw. die Piezomembran 28' einmal betätigt, um in der Pipettenspitze 11,11' eine definierte Abrisskante zu erzeugen. Das Volumen wird durch den Vorschub des Kolbens 23 bzw. des Keils 33 definiert und die Piezo-Aktivierung ermöglicht einen Tropfenabriss an derselben Stelle.
   B3 Während des ganzen Vorschubs des Kolbens 23 bzw. des Keils 33 wird der Piezo-Stapel 26 bzw. die Piezomembran 28' angeregt und der Flüssigkeitsstrahl in Einzeltropfen "zerhackt". Das Volumen wird durch den Vorschub definiert.
C Kleine Volumina
   Die Abgabe von Tropfen von weniger als 0.5 µl geschieht durch den Piezo-Stapel 26 bzw. durch die Piezomembran 28'. Der Vorschub der Bewegungselemente 7, d.h. der Kolben 23 bzw, der Keile 33 mit dem ersten Antrieb 8 dient zur Kompensation der abgegebenen Volumina. Idealerweise erfolgt die Kompensation so, dass der Raum, welcher durch Zylinderraum 24, Kolben 23 bzw. Membran 28,28', Flüssigkeitsleitung 10, Adapter 12 und/oder Pipettenspitze 11,11' definiert wird, zumindest vor der nächsten Impulsabgabe mit einer zusammenhängenden Flüssigkeitssäule vollständig gefüllt ist. Somit wird bei der Verwendung einer erfindungsgemässen Vorrichtung das Volumen einer abgegebenen Flüssigkeitsprobe bei gegebener Spitzengeometrie allein durch die Parameter eines einzelnen, durch den Impulsgenerator 9 erzeugten Impulses definiert.
D Kleinste Volumina
   Wird die Flüssigkeitssäule ein wenig hinter die Spitzenöffnung zurückgezogen, wird es möglich, einzelne Tropfen von bis zu 10 nl mit einzelnen Impulsen des Piezo-Stapels 26 bzw. der Piezomembran 28' aus einer Spitzenöffnung von bis zu 500 µm Durchmesser herauszuschleudern. Bei konstantem Öffnungsdurchmesser ist das Tropfenvolumen damit nur von der Impulsstärke abhängig.

Im Anschluss an diese Verfahrensschritte kann ein weiterer Dispens, gemäss den Fig. 8-11 erfolgen oder ein Spül- und Konditionierschritt, gemäss den Fig. 2-4 bzw. eine Probenaufnahme gemäss den Fig. 5-7 ausgeführt werden.

Die besondere Anordnung von Hohlkörper 4, Antrieben 8,14, Impulsgenerator 9, Kolben 23, Zylinderraum 24 und Adapter 12 bzw. Pipettenspitzen 11,11' ermöglicht eine extrem schlanke Bauweise der Vorrichtung 1, so dass diese speziell geeignet ist, einen Baustein in einem System zur Aufnahme und/oder Abgabe von Flüssigkeitsproben zu bilden, welches mehrere solche Vorrichtungen 1 umfasst. So ein System ist beispielsweise ein Pipettierautomat bzw. (im Falle eines Systems zur Abgabe von Proben) ein Dispensierautomat. Ein solches System wird vorzugsweise zur Abgabe von Flüssigkeiten in die Aufnahmetöpfchen ("Wells") von Standard-Mikroplatten mit z.B. 96 Wells, bzw. die im Wesentlichen ebene Oberfläche eines Targets oder eines Bio-Chips (Dispensierung), oder zur Aufnahme von Flüssigkeiten aus der einen und Abgabe der Probe in eine andere Mikroplatte (Pipettierung) verwendet. Die Reduktion der Probenvolumina (z.B. zum Befüllen von hochdichten Mikroplatten mit 384, 864, 1536 oder noch mehr Töpfchen) spielt eine zunehmend wichtige Rolle, wobei der Genauigkeit des abgegebenen Probenvolumens grosse Bedeutung zukommt. Ebenfalls ist der Zeitaufwand für das Abgeben bzw. Transferieren von Proben in diese vielen Töpfchen wesentlich. Es ist klar, dass ein Mehrfaches an parallel bedienbaren Pipettenspitzen den Zeitaufwand für die effektive Probenabgabe bzw. für das Transferieren um den gleichen Faktor reduziert.

Weil die Anordnung der Töpfchen in den Mikroplatten einem zwei-dimensionalen Array entspricht, werden die Bauteile, Hohlkörper 4, Antriebe 8,14, Impulsgeneratoren 9, Kolben 23, Zylinderräume 24 und Adapter 12 bzw. Pipettenspitzen 11,11' eines Systems bevorzugt ebenso angeordnet. Um eine kompakte Konstruktion zu erreichen, werden dabei Zylinderräume 24 und Adapter 12 bzw. Pipettenspitzen 11,11' parallel zueinander angeordnet. Ein Beispiel einer solchen Anordnung ist in Figur 12 dargestellt.

Ein Nachteil der meisten bekannten Multikanal-Systeme liegt darin, dass Volumina im Submikroliterbereich nur "on Tip Touch" oder "on Liquid Surface", nicht aber berührungslos (direkt aus der Luft, "From Air") abgegeben werden können. Ein Multikanal-System entsprechend der vorliegenden Erfindung ermöglicht dagegen, die pipettierbaren Volumina in jedem Fall bis in den Nanoliterbereich zu verkleinern.

Figur 12 zeigt einen vertikalen Teilschnitt eines Systems 40 mit mehreren Vorrichtungen 1, gemäss der ersten Ausführungsform, in der "Spül-Position" (vgl.
Fig. 2). Im Unterschied zu der Fig. 2 laufen hier die Bewegungseinheiten 3 in einer linearen bzw. flächigen Matrix bzw. in Ausnehmungen der Trägereinheit 13, wobei diese Ausnehmungen - und damit auch die Bewegungseinheiten 3 - parallel zu einander und in einer Line (ein-dimensionales Array) bzw. in einer Ebene (zwei-dimensionales Array) nebeneinander angeordnet sind. Die spülleitungen 15 können gemeinsam in einer Platte 37 angeordnet oder auch individuell zu jedem der Spüleinlässe 16 im Hohlkörper 4 zugeleitet werden. Vorzugsweise sind jedoch alle Spüleinlässe bei einer definierten Position der Kolben 23 auf der gleichen Höhe angeordnet, so dass mit einer Steuerung (nicht gezeigt) alle Kolben dieses linearen oder flächigen Arrays - je nach Bedarf - individuell oder parallel angesteuert werden können. Bevorzugt wird die Spülflüssigkeit während dem Spülvorgang mit einem bestimmten Druck geliefert, damit alle Zylinderräume 24 genügend versorgt werden.

Figur 13 zeigt einen horizontalen, stark schematisierten Teilschnitt des in Fig. 12 dargestellten zwei-dimensionalen Arrays eines 12-Kanal-Systems 40 zur Aufnahme und/oder Abgabe von Proben einer Flüssigkeit 2. In einer ersten Ebene, welche rechtwinklig zu den parallel angeordneten Antriebselementen 8',14' (nummeriert von 1 bis 12) verläuft, liegen drei Antriebswellen 42, die je über einen Motor 30 angetrieben sind. Jede dieser Antriebswellen 42 kann im direkten Eingriff mit einem ersten Antriebselement 8' stehen (nicht dargestellt). In einer zu dieser ersten parallelen, zweiten Ebene, welche ebenfalls rechtwinklig zu den parallel angeordneten Antriebselementen 8',14' verläuft, liegen ebenfalls drei Antriebswellen 42', die je über einen Motor 30' angetrieben sind. Jede dieser Antriebswellen 42' kann im direkten Eingriff mit einem zweiten Antriebselement 14' stehen (nicht dargestellt). Diese nicht dargestellte, einfachere Antriebs-Variante ermöglicht das synchrone Bewegen je einer Reihe 1-4, 2-8, oder 9-12 von Antriebselementen 8',14'. Die Kraftübertragung von einer Antriebswelle 42,42' auf ein Antriebselement 8',14' wird vorzugsweise als Schneckengetriebe ausgeführt.

Entsprechend der in Fig. 13 dargestellten, komplexeren Antriebs-Variante können etwas über- oder unterhalb der ersten und der zweiten Ebene Schaltwellen 47,47' liegen, welche im Wesentlichen rechtwinklig zu den Antriebswellen 42,42' verlaufen und von denen jede in Richtung ihrer Drehachse verschiebbar (vgl. Doppelpfeil) angeordnet ist. Diese Schaltwellen 47,47' sind durch einfaches Verschieben in Eingriff mit den Antriebswellen 42,42' und den Antriebselementen 8',14' bringbar. Das Verschieben wird durch je ein Schalter 46,46' bewirkt, welcher eine Schaltwelle 47,47' von einer Ruheposition (in welcher keine Wechselwirkung mit einer Antriebswelle 42,42' besteht; wie dargestellt) in eine Eingriffsposition (nicht dargestellt) bringt, in welcher eine Schaltwelle 47,47' mit einer Antriebswelle 42,42' im Eingriff steht. Ein solcher Schalter 46,46' kann dabei nach dem Solenoid-, Hydraulik, Pneumatik- oder einem anderen geeigneten Prinzip ausgebildet sein. Der Eingriff wird jeweils über ein Schaltelement 43,43' bewerkstelligt. Die Kraftübertragung von einer Antriebswelle 42,42' auf ein Schaltelement 43,43' und von dort auf ein Antriebselement 8',14' wird vorzugsweise als Schneckengetriebe ausgeführt. Eine erste Variante dieses komplexeren Antriebs sieht vor, dass die Schaltelemente 43,43' starr mit der Schaltwelle 47,47', auf der sie angeordnet sind, verbunden sind. In diesem Fall kann ein einzelner Motor 30 bzw. 30' auf alle Antriebselemente 8' bzw. 14' einwirken, wenn alle Schaltelemente 43 bzw. 43' im Eingriff mit den Antriebswellen 42 bzw. 42' und den Antriebselementen 8' bzw. 14' steht. Auch können selektiv einzelne Kolonnen 1,5,9; 2,6,10; 3,7,11; oder 4,8,12 mit jeweils einem einzigen Motor bewegt werden.

Vorzugsweise sind die Schaltelemente 43 bzw. 43' - gemäss einer zweiten Variante dieses komplexeren Antriebs - nicht starr mit den Schaltwellen 47,47' verbunden. In diesem Fall können einzelne Reihen 1-4, 5-8, oder 9-12 der Antriebselemente 8',14' durch In-Eingriff-Bringen der Schaltelemente 43,43' mit einer Antriebswelle 42,42' und durch Antreiben dieser Reihe mit einem Motor 30,30' bewegt werden. Es ist aber auch möglich, gezielt einzelne Antriebselemente 8',14' in einem Array anzusteuern und zu bewegen. Selbstverständlich können auch alle Antriebselemente 8,14' eines Arrays gleichzeitig und synchron bewegt werden. Diese speziellen Bewegungsmöglichkeiten gelten auch für Arrays, welche wesentlich mehr Pipettier- oder Dispensier-Kanäle, z.B. 96, 384 oder 1536 Kanäle, umfassen und die vorzugsweise so in einem System zur Aufnahme und/oder Abgabe von Proben einer Flüssigkeit angeordnet sind, dass die Pipettier- oder Dispensier-Kanäle in ihrer horizontalen Verteilung und Anordnung gerade der Verteilung und Anordnung der Wells von Mikroplatten mit z.B. 96, 384 oder 1536 Wells übereinstimmen.

Figur 14 zeigt eine Vorrichtung zur Aufnahme und/oder Abgabe von flüssigkeitsproben mit einem Spülanschluss gemäss einer ersten Variante. Diese Vorrichtung ist dadurch gekennzeichnet, dass das Bewegungselement 7 zum Aspirieren und/oder Dispensieren von Flüssigkeit 2 eine Membran 28,28' umfasst. Die Vorrichtung 1 zur Aufnahme und/oder Abgabe von Proben einer Flüssigkeit 2 umfasst eine Bewegungseinheit 3. Diese Bewegungseinheit 3 umfasst einen Hohlkörper 4 mit einen Hohlraum 5. Der Hohlraum 5 ist mit einer Systemflüssigkeit 6 oder einer Probenflüssigkeit 2 im Wesentlichen füllbar. Die das Bewegungselement 7 bildende Membran 28 kann als passive Membran 28 (vgl. Fig. 16) oder als aktive Membran 28' (vgl. Fig. 17) ausgebildet sein und wirkt zum Aspirieren und/oder Dispensieren der Flüssigkeit 2 auf den Hohlraum 5. Ein erstes Antriebselement 8' (vgl. Fig. 16,17) zum Auslenken des Bewegungselements 7 beim Aspirieren bzw. Dispensieren steht mit einem ersten Antrieb 8 im Eingriff. Ein Impulsgenerator 9 dient beim Dispensieren zum Erzeugen von Druckwellen in einer der Flüssigkeiten 2,6 im Hohlraum 5, welcher in eine Flüssigkeitsleitung 10 mündet. Die Bewegungseinheit 3 umfasst des Weiteren eine Pipettenspitze 11 oder einen Adapter 12 zur Aufnahme einer abwerfbare Pipettenspitze 11', wobei die Flüssigkeitsleitung 10 in den Adapter 12 und/oder die Pipettenspitze 11,11' übergeht bzw. die Pipettenspitze 11 und/oder den Adapter 12 umfasst. Die Bewegungseinheit 3 ist an einer Trägereinheit 13 angeordnet und zumindest in Richtung einer X-, Y- oder Z-Raumachse beweglich ausgebildet. Die Trägereinheit 13 umfasst - zum Bewegen der Bewegungseinheit 3 in Richtung einer X-, Y- oder Z-Raumachse - zumindest ein, im Eingriff mit einem zweiten Antrieb 14 stehendes, zweites Antriebselement 14'. Die Trägereinheit 13 umfasst zudem eine Spülleitung 15 und der Hohlkörper 4 einen in den Hohlraum 5 mündenden Spüleinlass 16. Der Hohlkörper 4 ist in Folge seiner Beweglichkeit in Richtung einer X-, Y- oder Z-Raumachse - zum Verbinden und Trennen von Spülleitung 15 und Spüleinlass 16 ausgebildet. Der Hohlkörper 4 umfasst im Bereich des Spüleinlasses 16 ein zusätzliches Ventil 17 zum Öffnen und Schliessen des Spüleinlasses 16. Der Spüleinlass 16 umfasst eine Kontaktstelle 21, weiche mittels einer Bewegung des Hohlkörpers 4 in Richtung einer X-, Y- oder Z-Raumachse zum Verbinden und Unterbrechen von Spülleitung 15 und Spüleinlass 16 mit einem Endstück 22 der Spülleitung 15 beaufschlagbar ausgebildet ist. In der Darstellung von Fig. 14 wird die Bewegungseinheit 3 und damit auch der Hohlkörper 4 in Z-Richtung, senkrecht bewegt (vgl. Doppelpfeil). Die Spülleitung 15 ist vorzugsweise unbeweglich ausgebildet, so dass die Bewegungseinheit 3 in eine Spülposition bewegt werden muss, damit Spülleitung 15 und Spüleinlass 16 in dieser Spülposition der Vorrichtung 1 miteinander verbunden werden. Alternativ zu dieser eben beschriebenen Vorrichtung ist der Spüleinlass 16 - zumindest während des Betriebs der Vorrichtung 1 - direkt und permanent mit einer (nicht dargestellten) Zuführleitung für Flüssigkeiten (System- oder Probenflüssigkeiten) verbunden.

Figur 15 zeigt eine Vorrichtung 1 zur Aufnahme und/oder Abgabe von Flüssigkeitsproben, die eine Membran 28,28' und einen Spülanschluss gemäss einer zweiten Variante umfasst. Der Hohlkörper 4 ist in Folge seiner Beweglichkeit in Richtung einer X-, Y- oder Z-Raumachse - zum Verbinden und Trennen von Spülleitung 15 und Spüleinlass 16 ausgebildet. Der Hohlkörper 4 ist im Bereich des Spüleinlasses 16 als Schieberventil zum Öffnen und Schliessen des Spüleinlasses 16 ausgebildet. Zwischen einer Oberfläche 18 des Hohlkörpers 4 und einer Oberfläche 19 der Trägereinheit 13 sind Dichtungsmittel 20, z.B. in der Form von Lippendichtungen, angeordnet. In der Darstellung von Fig. 15 wird die Bewegungseinheit 3 und damit auch der Hohlkörper 4 in Z-Richtung, senkrecht bewegt (vgl. Doppelpfeil). Die Spülleitung 15 ist vorzugsweise unbeweglich ausgebildet, so dass die Bewegungseinheit 3 in eine Spülposition bewegt werden muss, damit Spülleitung 15 und Spüleinlass 16 in dieser Spülposition der Vorrichtung 1 miteinander verbunden werden. Die Spülleitung 15 ist - zumindest während des Betriebs der Vorrichtung 1 - direkt und permanent mit einer (nicht dargestellten) Zuführleitung für Flüssigkeiten (System- oder Probenflüssigkeiten) verbunden.

Abweichend von der Darstellung in den Figuren 14 und 15 könnte die Bewegung zum Verbinden bzw. Trennen von Spülleitung 15 und Spüleinlass 16 in einer beliebigen Richtung, z.B. in der Richtung der Y- oder X-Raumachse oder auch in einer von diesen definierten X-, Y- oder Z-Raumachsen abweichenden Richtung ausgeführt werden.

Figur 16 zeigt eine Vorrichtung 1 zur Aufnahme und/oder Abgabe von Flüssigkeitsproben 2 mit einer passiven Membran 28 und einem Impulsgenerator 9 gemäss einer ersten Variante. Die passive Membran 28 ist an ihrem Umfang 29 mit der Innenwand 38 des Hohlkörpers 4 und an ihrer Rückseite 31 mit einem Piezostapel 26 verbunden. Dieser Piezostapel 26 ist als Impulsgenerator 9 zum Abgeben von Impulsen auf die passive Membran 28 und damit auf die Flüssigkeiten 2,6 im Hohlraum 5 ausgebildet. Der Piezostapel 26 ist an seinem hinteren Ende 27 mit einem ersten Antrieb 8 zum Heben und Senken der Membran 28, d.h. zum Aspirieren und/oder Dispensieren von Flüssigkeit 2 verbunden. Der erste Antrieb 8 umfasst vorzugsweise einen DC-Motor mit einem Encoder oder einen Schrittmotor, welcher über ein mit dem Motor 30 verbundenes Übertragerstück 31 und ein daran befestigtes Miniaturlager 32 auf einen am hinteren Ende 27 des Piezostapels 26 befestigten Keil 33 wirkt. Vorzugsweise umfasst die Vorrichtung 1 eine Steuerung zum Bewegen der Membran 28 mit dem ersten Antrieb 8 und/oder der Bewegungseinheit 3 mit dem zweiten Antrieb 14 sowie der Impulse des Piezostapels 26 und, falls erforderlich, zum Steuern des Ventils 17.

Figur 17 zeigt eine Vorrichtung zur Aufnahme und/oder Abgabe von Flüssigkeitsproben mit einer aktiven, bimorphen, als Impulsgenerator 9 zum Abgeben von Impulsen auf die Flüssigkeit 2 im Hohlraum 5 ausgebildeten Piezomembran 28', gemäss einer zweiten Variante. Die Membran 28' ist an ihrer Rückseite 31' oder an ihrem Umfang 29' mit einem Hohlzylinder 34 verbunden, wobei der Hohlzylinder 34 einen Keil 33 trägt. Vorzugsweise umfasst die Vorrichtung 1 eine Ringdichtung 35, welche den Hohlraum 5 zwischen dem Umfang 29' der aktiven Membran 28' und der Innenwand 38 des Hohlkörpers 4 abschliesst. Der erste Antrieb 8 umfasst bevorzugt einen DC-Motor mit einem Encoder oder einen Schrittmotor, welcher über ein mit dem Motor 30 verbundenes Übertragerstück 31 und ein daran befestigtes Miniaturlager 32 auf den am Hohlzylinder 34 befestigten Keil 33 wirkt. Vorzugsweise umfasst die Vorrichtung 1 eine Steuerung zum Bewegen des Keils 33 mit dem ersten Antrieb 8 und/oder der Bewegungseinheit 3 mit dem zweiten Antrieb 14 sowie der Impulse der Piezomembran 28' und, falls erforderlich, zum Steuern des Ventils 17. Alle gezeigten Vorrichtungen bzw. Systeme können eine Robotervorrichtung oder eine andere zum Bewegen der Vorrichtungen bzw. deren Arrays geeignete Einrichtung umfassen. Dies ist insbesondere dann von Vorteil, wenn der Aufnahmeort einer Flüssigkeit von deren Abgabeort verschieden ist und die Vorrichtungen 1 in X- und/oder Y- und/oder Z-Richtung bewegt werden müssen. Die Bewegungseinheiten 3 sind vorzugsweise gemäss einer ersten Anordnung parallel zu der Z-Raumachse und damit senkrecht zu der durch die Achsen X und Y aufgespannten Ebene angeordnet und bilden so ein lineares Array. In einer zweiten, alternativen Anordnung sind die Bewegungseinheiten 3 gegenüber der Z-Achse geneigt angeordnet. Insbesondere bei einer Ausführung eines Systems 40, mit dem z.B. 8, 16 oder 32 Proben in einer Linie abgegeben sollen, sind dann die Bewegungseinheiten 3 alternierend gegenüber der Z-Achse positiv oder negativ geneigt. Mit dieser besonderen Anordnung der Bewegungseinheiten 3 können die Abgabeorte für die Proben näher beieinander liegen, als dies mit einem linearen Array von parallel zu einander angeordneten Bewegungseinheiten 3 möglich wäre.

Die einander entsprechenden Elemente sind in den Figuren mit den gleichen Bezugszeichen versehen, dabei sind diese Bezugszeichen nicht in jedem Fall im Text zitiert. Insbesondere sind die Merkmale in den Figuren 1-13 beliebig kombinierbar.

## Patentansprüche

1. Vorrichtung (1) zum Pipettieren bzw. Dispensieren von Flüssigkeitsproben (2) mit einer Bewegungseinheit (3), wobei diese Vorrichtung (1) umfasst:
• einen Hohlkörper (4) mit einem darin angeordneten, als Pumpenzylinder (24) ausgebildeten Hohlraum (5), der mit einer Systemflüssigkeit (6) oder einer Probenflüssigkeit (2) im wesentlichen befüllbar ist, und mit einem beweglich in diesem Zylinder (24) angeordneten Pumpkolben (23);
• ein, im Eingriff mit einem ersten Antrieb (8) stehendes, bzw. damit in Eingriff bringbares, erstes Antriebselement (8') zum Bewegen des Pumpkolbens (23) beim Aspirieren bzw. Dispensieren;
• eine Pipettenspitze (11) oder einen Adapter (12) zur Aufnahme einer abwerfbaren Pipettenspitze (11');
• eine Flüssigkeitsleitung (10), welche den Pumpenzylinder (24) mit der Pipettenspitze (11) oder dem Adapter (12) verbindet;
• eine Spülleitung (15) und einen im Hohlkörper (4) angeordneten Spüleinlass (16), welcher in den Pumpenzylinder (24) mündet;
• eine Trägereinheit (13), welche - zum Bewegen der beweglich an derselben angeordneten Bewegungseinheit (3) in Richtung zumindest einer X-, Y- oder Z-Raumachse - zumindest einen im Eingriff mit einem zweiten Antriebselement (14') stehenden zweiten Antrieb (14) umfasst;
**dadurch gekennzeichnet, dass** die Bewegungseinheit (3) sowohl den Hohlkörper (4) mit dem Pumpenzylinder (24) und dem Pumpkolben (23), das erste und zweite Antriebselement (8',14') und die Pipettenspitze (11) oder den Adapter (12) sowie einen Impulsgenerator (9) zum Erzeugen von Druckwellen in einer sich im Pumpenzylinder (24) befindenden Flüssigkeit (2,6) beim Dispensieren dieser Flüssigkeit (2,6) umfasst, wobei alle diese Elemente der Bewegungseinheit (3) in Richtung dieser X-, Y- oder Z-Raumachse gemeinsam gegenüber der Trägereinheit (13) bewegbar sind.

2. Vorrichtung (1) nach Anspruch 1, **dadurch gekennzeichnet, dass** die Flüssigkeitsleitung (10) in den Adapter (12) oder die Pipettenspitze (11,11') übergeht.

3. Vorrichtung (1) nach Anspruch 1, **dadurch gekennzeichnet, dass** die Flüssigkeitsleitung (10) die Pipettenspitze (11) oder den Adapter (12) umfasst.

4. Vorrichtung (1) nach einem der vorhergehenden Ansprüche, **dadurch gekennzeichnet, dass** das zweite Antriebselement (14') als Zahnstange auf der äusseren Oberfläche (18) des Hohlkörpers (4) ausgebildet ist.

5. Vorrichtung (1) nach einem der vorhergehenden Ansprüche, **dadurch gekennzeichnet, dass** der Hohlkörper (4) - in Folge seiner Beweglichkeit gegenüber der Trägereinheit in Richtung einer X-, Y- oder Z-Raumachse - zum Verbinden und Trennen von Spülleitung (15) und Spüleinlass (16) im Bereich des Spüleinlasses (16) als Schieberventil ausgebildet ist.

6. Vorrichtung (1) nach einem der Ansprüche 1 bis 4, **dadurch gekennzeichnet, dass** der Hohlkörper (4) ein zusätzliches Ventil (17) im Bereich des Spüleinlasses (16) zum Öffnen und Schliessen des Spüleinlasses (16) umfasst.

7. Vorrichtung (1) nach einem der vorhergehenden Ansprüche, **dadurch gekennzeichnet, dass** zwischen einer Oberfläche (18) des Hohlkörpers (4) und einer Oberfläche (19) der Trägereinheit (13) Dichtungsmittel (20) angeordnet sind.

8. Vorrichtung (1) nach einem der vorhergehenden Ansprüche, **dadurch gekennzeichnet, dass** der Spüleinlass (16) eine Kontaktstelle (21) umfasst, welche mittels einer Bewegung des Hohlkörpers (4) in Richtung einer X-, Y-oder Z-Raumachse zum Verbinden und Unterbrechen von Spülleitung (15) und Spüleinlass (16) mit einem Endstück (22) der Spülleitung (15) beaufschlagbar ausgebildet ist.

9. Vorrichtung (1) nach einem oder mehreren der vorhergehenden Ansprüche,
**dadurch gekennzeichnet, dass** der Kolben (23) an seinem hinteren Ende (25) mit einem Piezostapel (26) verbunden ist, der als Impulsgenerator (9) zum Abgeben von Impulsen auf den Kolben (23) und damit auf die Flüssigkeiten (2,6) im Pumpenzylinder (24) ausgebildet ist, wobei der Piezostapel (26) an seinem hinteren Ende (27) mit dem ersten Antriebselement (8') zum Heben und Senken des Kolbens (23) verbunden ist.

10. Vorrichtung (1) nach Anspruch 9, **dadurch gekennzeichnet, dass** die Vorrichtung eine Steuerung zum Bewegen des Kolbens (23) mit dem ersten Antrieb (8), zum Bewegen der Bewegungseinheit (3) mit dem zweiten Antrieb (14), oder zum Bewegen des Kolbens (23) und der Bewegungseinheit (3) mit dem ersten und zweiten Antrieb (8,14), zur Synchronisation dieser beiden Antriebe sowie zur Steuerung der Impulse des Piezostapels (26) und, falls erforderlich, zum Steuern des Ventils (17) umfasst.

11. System (40) zum Pipettieren bzw. Dispensieren von Flüssigkeitsproben (2),
**dadurch gekennzeichnet, dass** es eine oder mehrere Vorrichtungen (1) gemäss einem oder mehreren der vorhergehenden Ansprüche 1 bis 10 umfasst.

12. System (40) nach Anspruch 11, **dadurch gekennzeichnet, dass** das System eine Robotervorrichtung zum Bewegen der Vorrichtungen (1) in zumindest eine der X-, Y- und Z-Richtungen umfasst.

13. System (40) nach Anspruch 11 oder 12, **dadurch gekennzeichnet, dass** es erste Antriebe (8) und zweite Antriebe (14) mit Wellen (42) umfasst, welche zum Angreifen über Schaltelemente (43,43') am ersten Antriebselement (8'), am zweiten Antriebselement (14'), oder am ersten und zweiten Antriebselement (8',14') einzelner Vorrichtungen (1) oder von linearen Gruppen ausgebildet sind.

14. System (40) nach Anspruch 11 oder 12, **dadurch gekennzeichnet, dass** es erste Antriebe (8) und zweite Antriebe (14) mit Wellen (42) umfasst, welche zum Angreifen über Schaltelemente (43,43') am ersten Antriebselement (8'), am zweiten Antriebselement (14'), oder am ersten und zweiten Antriebselement (8',14') einzelner Vorrichtungen (1) oder von zwei-dimensionalen Arrays von Vorrichtungen (1) ausgebildet sind.

15. System (40) nach Anspruch 13 oder 14, **dadurch gekennzeichnet, dass** die Gruppen 4, 8, 12, 16, 24 oder 32 Vorrichtungen (1) und die Arrays 16, 32, 96, 384 oder 1536 Vorrichtungen umfassen.

16. System (40) nach einem der Ansprüche 13 bis 15, **dadurch gekennzeichnet, dass** es Schalter (46,46') zum linearen Verschieben von Schalt-Wellen (47) umfasst, welche - je nach Position - in Eingriff mit den Wellen (42) der Antriebe (8,14), mit den Antriebselementen (8',14'), oder mit den Antrieben (8,14) und Antriebselementen (8',14') - gebracht werden können.

17. Verwendung einer Vorrichtung (1) nach einem der Ansprüche 1 bis 10 bzw. eines Systems (40) nach einem der Ansprüche 11 bis 16 zum Pipettieren oder Dispensieren von Flüssigkeitsproben (2).

18. Verwendung nach Anspruch 17, **dadurch gekennzeichnet, dass** Flüssigkeitsproben (2) in die Wells einer Mikroplatte mit vorzugsweise 96, 384 oder 1536 Wells pipettiert oder dispensiert werden.

19. Verwendung nach Anspruch 17, **dadurch gekennzeichnet, dass** Flüssigkeitsproben (2) auf die Oberfläche eines Targets für die Probenuntersuchung pipettiert oder dispensiert werden, wobei die Targets ausgewählt sind aus einer Gruppe, die MALDI TOF-MS Targets und Bio-Chips umfasst.

## Claims

1. Device (1) for aspirating and/or dispensing samples of a liquid (2), which includes a movement unit (3), this device (1) including:
- a hollow body (4) having a cavity (5) in the form of a pump cylinder (24), which may be essentially filled with a system liquid (6) or a sample liquid (2), and having a pump piston (23) which can be moved inside this cylinder (24);
- a first drive element (8') designed to move the pump piston (23) for the purpose of aspirating and/or dispensing, engaged or capable of being engaged with a first drive (8);
- a pipette tip (11 ) or an adapter (12) for receiving a disposable pipette tip (11');
- a liquid line (10) that connects the pump cylinder (24) to the pipette tip (11) or the adapter (12);
- a flush line (15) and a flush inlet (16) provided in the hollow body (4) opening into the pump cylinder (24);
- a carrier unit (13) for moving the movement unit (3) in the direction of an X, Y, or Z spatial axis, including at least one second drive (14), which is engaged with a second drive element (14');
**characterized in that** the movement unit (3) includes the hollow body (4) with the pump cylinder (24) and pump piston (23), the first and second drive elements (8', 14') and the pipette tip (11) or the adapter (12) as well as a pulse generator (9) for generating pressure waves in a fluid (2, 6) contained in the pump cylinder (24) when dispensing this fluid (2, 6), all these elements of the movement unit (3) being movable together in the direction of this X, Y or Z spatial axis with respect to the carrier unit (13).

2. Device (1) according to Claim 1, **characterized in that** the liquid line (10) leads into the adapter (12) or the pipette tip (11, 11').

3. Device (1) according to Claim 1, **characterized in that** the liquid line (10) includes the pipette tip (11) or the adapter (12).

4. Device (1) according to one of the preceding Claims, **characterized in that** the second drive element (14') is implemented as a rack on the outer surface (18) of the hollow body (4).

5. Device (1) according to one of the preceding Claims, **characterized in that** the hollow body (4), by reason of its mobility with respect to the carrier unit in the direction of an X, Y or Z spatial axis, is designed as a sliding valve for the connection and isolation of the flush line (15) and flush inlet (16) in the zone of the flush inlet (16).

6. Device (1) according to one of Claims 1 to 4, **characterized in that** the hollow body (4) is provided with a supplementary valve (17) in the zone of the flush inlet (16) for opening and closing the flush inlet (16).

7. Device (1) according to one of the preceding Claims, **characterized in that** between a surface (18) of the hollow body (4) and a surface (19) of the carrier unit (13), sealing means (20) are provided.

8. Device (1) according to one of the preceding Claims, **characterized in that** the flush inlet (16) includes a contact point (21 ), which is implemented so that an end piece (22) of the flush line (15) may be applied to it by means of a movement of the hollow body (4) in the direction of an X, Y, or Z spatial axis in order to connect and disconnect the flush line (15) and flush inlet (16).

9. Device (1) according to one or more of the preceding Claims, **characterized in that** the piston (23) is connected at its rear end (25) to a piezo-stack (26) designed as a pulse generator (9) for emitting pulses on to the piston (23) and thence on to the liquids (2, 6) in the pump cylinder (24), the rear end (27) of the piezo-stack (26) being connected to the first drive element (8') for raising and lowering the piston (23).

10. Device (1) according to Claim 9, **characterized in that** the device includes a controller for moving the piston (23) with the first drive (8), moving the movement unit (3) with the second drive (14), or for moving the piston (23) and the movement unit (3) with the first and second drives (8, 14), for synchronization of both these drives together with control of the pulses from the piezo-stack (26) and, if necessary, for controlling the valve (17).

11. System (40) for aspirating and/or dispensing samples of a liquid (2), **characterized in that** it includes one or more devices (1) according to one or more of the preceding Claims 1 to 10.

12. System (40) according to Claim 11, **characterized in that** the system includes a robot device for moving the devices (1) in at least one of the X, Y or Z directions.

13. System (40) according to Claim 11 or 12, **characterized in that** it includes first drives (8) and second drives (14) having shafts (42), which are implemented to engage, via switch elements (43, 43'), with the first drive element (8'), the second drive element (14') or the first and second drive elements (8', 14') of individual devices (1) or of linear groups of devices.

14. System (40) according to Claim 11 or 12, **characterized in that** it includes first drives (8) and second drives (14) having shafts (42), which are implemented to engage, via switch elements (43, 43'), with the first drive element (8'), the second drive element (14') or the first and second drive elements (8', 14') of individual devices (1) or of two-dimensional arrays of devices (1).

15. System (40) according to Claim 13 or 14, **characterized in that** the groups include 4, 8, 12, 16, 24, or 32 devices (1) and the arrays include 16, 32, 96, 384, or 1536 devices.

16. System (40) according to one of Claims 13 to 15, **characterized in that** it includes switches (46, 46') for linear displacement of selector shafts (47), which - depending on position - may be engaged with the shafts (42) of the drives (8, 14), with the drive elements (8', 14'), or with the drives (8, 14) and the drive elements (8', 14').

17. Use of a device (1) according to one of Claims 1 to 10 or of a system (40) according to one of Claims 11 to 16 for aspirating or dispensing samples of a liquid (2).

18. Use according to Claim 17, **characterized in that** samples of a liquid (2) are aspirated or dispensed in the wells of a micro-plate, particularly a micro-plate having 96, 384, or 1536 wells.

19. Use according to Claim 17, **characterized in that** samples of the liquid (2) are aspirated or dispensed on the surface of a target for sample investigation, the targets being selected from a group including MALDI TOF-MS targets and biochips.

## Revendications

1. Dispositif (1) destiné à pipetter ou distribuer des échantillons de liquide (2) comportant une unité mobile (3), ce dispositif (1) comprenant :
* un corps creux (4) présentant un espace creux (5) disposé à l'intérieur et conçu en tant que cylindre de pompe (24), qui peut être essentiellement rempli d'un liquide système (6) ou d'un liquide échantillon (2), et présentant un piston de pompe (23) disposé de façon mobile dans ce cylindre (24) ;
* un premier élément d'entraînement (8') en prise avec un premier entraînement (8) ou pouvant être amené en prise avec celui-ci et destiné à déplacer le piston de pompe (23) lors de l'aspiration ou de la distribution ;
* une pointe de pipettage (11) ou un adaptateur (12) permettant de loger une pointe de pipettage jetable (11') ;
* une conduite de liquide (10) qui relie le cylindre de pompe (24) à la pointe de pipettage (11) ou à l'adaptateur (12) ;
* une conduite de lavage (15) et une entrée de lavage (16) disposée dans le corps creux (4) et qui débouche dans le cylindre de pompe (24) ;
* une unité de support (13) qui - pour déplacer l'unité mobile (3) disposée de façon mobile à son niveau dans la direction d'au moins un axe spatial X, Y ou Z - comprend au moins un second entraînement (14) en prise avec un second élément d'entraînement (14') ;
**caractérisé en ce que** l'unité mobile (3) comprend tant le corps creux (4) avec le cylindre de pompe (24) et le piston de pompe (23), le premier et le second élément d'entraînement (8', 14') et la pointe de pipettage (11) ou l'adaptateur (12), ainsi qu'un générateur d'impulsion (9) permettant de générer des ondes de pression dans un liquide (2, 6) qui se trouve dans le cylindre de pompe (24) lors de la distribution de ce liquide (2, 6), tous ces éléments de l'unité mobile (3) pouvant être déplacés dans la direction de cet axe spatial X, Y ou Z par rapport à l'unité de support (13).

2. Dispositif (1) selon la revendication 1, **caractérisé en ce que** la conduite de liquide (10) passe dans l'adaptateur (12) ou la pointe de pipettage (11, 11').

3. Dispositif (1) selon la revendication 1, **caractérisé en ce que** la conduite de liquide (10) comprend la pointe de pipettage (11) ou l'adaptateur (12).

4. Dispositif (1) selon l'une des revendications précédentes, **caractérisé en ce que** le second élément d'entraînement (14') est conçu à la façon d'une tige dentée sur la surface externe (18) du corps creux (4).

5. Dispositif (1) selon l'une des revendications précédentes, **caractérisé en ce que** le corps creux (4) - du fait de sa mobilité par rapport à l'unité de support dans la direction d'un axe spatial X, Y, ou Z - est conçu en tant que soupape de coulisse, pour relier et séparer la conduite de lavage (15) et l'entrée de lavage (16) dans la zone de l'entrée de lavage (16).

6. Dispositif (1) selon l'une des revendications 1 à 4, caractérisé en ce le corps creux (4) comporte une soupape supplémentaire (17) dans la zone de l'entrée de lavage (16), destinée à ouvrir et fermer l'entrée de lavage (16).

7. Dispositif (1) selon l'une des revendications précédentes, **caractérisé en ce qu'**entre une surface (18) du corps creux (4) et une surface (19) de l'unité de support (13) est disposé un moyen d'étanchéité (20).

8. Dispositif (1) selon l'une des revendications précédentes, **caractérisé en ce que** l'entrée de lavage (16) comporte un point de contact (21), qui est conçu pour être chargé, au moyen d'un déplacement du corps creux (4) dans la direction d'un axe spatial X, Y ou Z, par un élément d'extrémité (22) de la conduite de lavage (15) afin de connecter et d'interrompre la connexion de la conduite de lavage (15) et l'entrée de lavage (16).

9. Dispositif (1) selon une ou plusieurs des revendications précédentes, **caractérisé en ce que** le piston (23) est relié au niveau de son extrémité arrière (25) à une piezopile (26) qui est conçue comme un générateur d'impulsions (9) pour émettre des impulsions sur le piston (23) et par conséquent sur les liquides (2, 6) du cylindre de pompe (24), la piezopile (26) étant reliée au niveau de son extrémité arrière (27) au premier élément d'entraînement (8') destiné à lever et abaisser le piston (23).

10. Dispositif (1) selon la revendication 9, **caractérisé en ce que** le dispositif comporte un dispositif de commande permettant de déplacer le piston (23) avec le premier entraînement (8), de déplacer l'unité mobile (3) avec le second entraînement (14), ou de déplacer le piston (23) et l'unité mobile (3) avec le premier et le second entraînements (8, 14), afin de synchroniser ces deux entraînements et de commander les impulsions de la piezopile (26) et, si nécessaire, de commander la soupape (17).

11. Système (40) destiné à pipetter ou distribuer des échantillons liquides (2), **caractérisé en ce qu'**il comporte un ou plusieurs dispositifs (1) selon une ou plusieurs des revendications précédentes 1 à 10.

12. Système (40) selon la revendication 11, **caractérisé en ce que** le système comporte un dispositif robotisé permettant de déplacer les dispositifs (1) dans au moins une des directions X, Y et Z.

13. Système (40) selon la revendication 11 ou 12, **caractérisé en ce qu'**il comporte des premiers entraînements (8) et des seconds entraînements (14) comportant des arbres (42) qui sont conçus pour s'appliquer par des éléments de circuit (43, 43'), au niveau d'un premier élément d'entraînement (8'), au niveau d'un second élément d'entraînement (14'), ou au niveau d'un premier et d'un second éléments d'entraînement (8', 14') des différents dispositifs (1) ou de groupes linéaires.

14. Système (40) selon la revendication 11 ou 12, **caractérisé en ce qu'**il comporte des premiers entraînements (8) et des seconds entraînements (14) comportant des arbres (42) qui sont conçus pour s'appliquer par des éléments de circuit (43, 43'), au niveau du premier élément d'entraînement (8'), au niveau du second élément d'entraînement (14'), ou au niveau des premier et second éléments d'entraînement (8', 14') des différents dispositifs (1) ou de réseaux à deux dimensions de dispositifs (1).

15. Système (40) selon la revendication 13 ou 14, **caractérisé en ce que** les groupes comprennent 4, 8, 12, 16, 24 ou 32 dispositifs (1) et les réseaux comprennent 16, 32, 96, 384 ou 1536 dispositifs.

16. Système (40) selon l'une des revendications 13 à 15, **caractérisé en ce qu'**il comprend un commutateur (46, 46') permettant le déplacement linéaire d'arbres de manoeuvre (47) qui - en fonction de la position - peuvent être amenés en prise avec les arbres (42) des entraînements (8, 14), avec les éléments d'entraînement (8', 14') ou avec les entraînements (8, 14) et les éléments d'entraînement (8', 14').

17. Utilisation d'un dispositif (1) selon l'une des revendications 1 à 10 ou d'un système (40) selon l'une des revendications 11 à 16 pour pipetter ou distribuer des échantillons liquides (2).

18. Utilisation selon la revendication 17, **caractérisée en ce que** les échantillons liquides (2) sont pipettés de ou distribués dans les puits d'une plaque de microtitration comportant de préférence 96, 384 ou 1 536 puits.

19. Utilisation selon la revendication 17, **caractérisée en ce que** les échantillons liquides (2) sont pipettés ou distribués sur la surface d'une cible pour l'analyse d'échantillons, les cibles étant sélectionnées dans un groupe qui comprend les cibles pour spectrométrie de masse MALDI TOF et Bio-Chips.
